# EUROPEAN PATENT SPECIFICATION

(11) **EP 1 936 060 B1**
(45) Date of publication and mention of the grant of the patent: **18.09.2019**
(21) Application number: 07024591.5
(22) Date of filing: 19.12.2007
(51) Int. Cl.: E04D 13/17, E04D 13/152, E04B 1/70, B29C 48/09, B29C 48/16, B29C 48/88

(54) **A snow guard**
Schneefang
Garde-neige

(30) Priority: 19.12.2006 EP 06388068
(43) Date of publication of application: 25.06.2008
(73) Proprietor: Expo-Net Danmark A/S, 9800 Hjorring (DK)
(72) Inventor: Klinkby, John, 9800 Hjorring (DK)
(74) Representative: Budde Schou A/S

(56) References cited:
- EP-A- 0 084 909
- EP-A1- 1 704 916
- DE-A- 19 542 602
- DE-C- 19 602 979
- NL-C- 1 029 254
- US-A1- 2006 002 772

## Description

The present invention relates to snow guards, particularly to snow guards for being installed in houses, e.g. under roofs or in joints in a brick wall.

Related technical descriptions may be found in publications such as US 2006/0002772, US 4,932,634 and JP 2000257025. Reference is made to all of the above US publications, all of which are hereby incorporated in the present specification by reference in their entirety for all purposes.

DE 195 42 602 discloses a securing device for the eaves region of a roof. The device is made from a steel plate, and has a structure constituting a holder which is a mechanically solid structure, which allows additional fixtures to be fixated and safely supported by the holder.

EP 0 084 909 discloses means for the protection of the lower edge of an inclined roof covered by roof tile. A beam replaces the lower tile lath of a usual roof boarding construction, and the protecting plate protects the lower edge of the chip board roof boarding plate against rain water.

DE 196 02 979 discloses a roof ventilation element and NL 1 029 254 discloses a seam grid.

DE19542602 discloses a securing device for attaching an accessory component such as a gutter holder in the eaves region of a roof.

EP 1 704 916 A1 discloses a method to produce tubular elements.

The snow guard according to the teachings of the present invention is preferably used for controlling windblown particles, e.g. snow and/or other particles. The snow guard may be installed in parts of constructions of houses, e.g. roofs or slits or joints in walls.

A first aspect of the present invention relates to a method according to claim 1, of producing a snow guard. The method according to the present invention is performed using an apparatus that may comprise:
a reservoir for storing granulate material, the reservoir having a first inlet and a first outlet,
a heating and pressurising unit including a chamber having a second inlet and a second outlet, the second inlet in communication with the first outlet, a path of travel defined from the second inlet to the second outlet, the heating unit comprising heating and pressurising elements distributed along the path of travel,
an extruder unit mounted downstream relative to the heating and pressurising unit at the second outlet, the extruder unit further including an extruder heating unit, the extruder defining an extruder outlet, the extruder unit generating a mesh-type tubular structure,
the method comprising the steps of:
   supplying the granulate material to the heating and pressurising unit from the reservoir via the first outlet to the second inlet,
   conveying the granulate material along the path of travel,
   heating the granulate material to an elevated temperature and pressurising the granulate material to an elevated pressure while conveying the granulate material along the path in the heating and pressurising unit, the heating and pressurising performed according to a specific heating and pressurising profile,
   transferring the heated and pressurised granulate material to the extruder unit,
   heating the granulate material within the extruder heating unit to an elevated temperature,
   extruding the mesh-type tubular structure from the granulate material, the mesh-type tubular structure defining a length-wise direction, and
   said mesh-type tubular structure comprising a first plurality of threads going in a first direction substantially parallel to said length-wise direction and a second plurality of threads going in a second direction different from the first direction,
   integrally extruding a flange extending from the mesh-type tubular structure, the flange extending parallel to the length-wise direction, and
   cooling the extruded mesh-type tubular structure by the cooling unit according to a specific cooling profile.

Specifically, the flange may be produced in a separate processing step independently of the mesh-type tubular structure. The flange may hereafter be mounted on the outer surface of the snow guard device.

A second aspect of the present invention relates to a snow guard according to claim 3, being manufactured by a method according to the first aspect of the invention, and comprising:
a body having a wall of a mesh structure, the body made from a flexible material, the body defining a substantially cylindrical geometry and a length-wise direction, the body being non-flexible in a direction parallel to the length-wise direction and
a flange integrally formed on a surface of the body, said flange extends from said surface of said body parallel to said length-wise direction and said body is made from an extruded material and said flange is co-extruded with said body and , wherein said body comprises a first plurality of threads orientated substantially parallel to said length-wise direction and a second plurality of threads orientated in a direction so as to define a specific angle to said length-wise direction.

The wall of the body is of a mesh-type structure. The wall of a mesh-type structure allows air to pass through the device while most windblown particles are halted in or at the device. This allows for the device to act as a kind of grid. The device may be installed in e.g. a roof, this allows for ventilation of an enclosure under the roof to be ventilated while e.g. snow and/or insects are kept from entering the enclosure. The insects and/or snow are both contemplated to be harmful to e.g. insulation and wooden constructions.

The body is made from a flexible material. The body is not flexible in the length-wise direction defined by the body. The body is resilient and after being pressed or deformed to a certain degree the body is able to return to its original state.

The flange is contemplated to provide several advantageous features. It is contemplated that the flange may be used during the installation of the device in e.g. a slit in a roof construction. The flange may be used for positioning the device e.g. by allowing the device to be turned more easily. The flange may also be used for fastening the device once it is in place. Fastening means, such as nails, screws and the like, may be used to fasten the device. The nails etc. may penetrate the flange, thereby fastening the device to a surface of the structure on or in which the device is to be fastened.

A feature of the present invention relates to the flange extending from the surface of the body parallel to the length-wise direction. The flange need not extend the entire length of the body. The flange need not be continuos along the length of the body. The flange may in some embodiments comprise several pieces or sections positioned along the length of the body. The flange is preferably made from the same material as the body, but may in some embodiments be made from a material different from that used to make the body.

In one embodiment of the present invention, the body is made from an extruded material and the flange is co-extruded with the body. To simplify production of the device according to the present invention, the flange and the body may be made at substantially the same time.

It is a feature of the present invention that the mesh body comprises a first plurality of threads orientated substantially parallel to the length-wise direction and a second plurality of threads orientated in a direction so as to define a specific angle to the length-wise direction.

The mesh structure is defined by a first plurality of threads going in a first direction and a second plurality of threads going in a second direction different from the first direction. One of the directions may be in the length-wise direction defined by the body.

The first and second threads may be arranged in two layers, where the treads in one layer are all orientated in one direction and the threads in the second layer are all orientated in the second direction. It is contemplated, amongst other things, that such an arrangement of the threads is advantageous in the production of the device according to the present invention. In other embodiments of the present invention, the threads may be woven or interlaced.

The specific angle may be in the interval 1 to 90 degrees, such as 5 to 75 degrees, such as 10 to 60 degrees, such as 20 to 50 degrees, such as 30 to 50 degrees, such as 40 to 48 degrees, such as 1 to 5 degrees, such as 5 to 15 degrees, such as 15 to 25 degrees, such as 25 to 35 degrees, such as 35 to 40 degrees, such as 40 to 50 degrees, such as 50 to 65 degrees, such as 65 to 75 degrees, such as 75 to 80 degrees, such as 80 to 90 degrees, preferably approximately 45 degrees.

The mesh and the flange may be made from polyethylene, HDPE, PP, LDPE, PVC, NYLON, ABS or any other polymer material.

The body may define a width of 1 to 25 cm, such as 2 to 20 cm, such as 5 to 15 cm, such as 10 to 12 cm, such as 1 to 2 cm, such as 2 to 4 cm, such as 4 to 6 cm, such as 6 to 8 cm, such as 8 to 10 cm, such as 10 to 12 cm, such as 12 to 14 cm, such as 14 to 16 cm, such as 16 to 18 cm, such as 18 to 20 cm, such as 20 to 25 cm, preferably 3 to 12 cm. The size of the body may depend on its intentional use, a smaller body may be useful when used in a joint compared to a body used in a roof construction.

The area of the mesh structure may include less than 50% material, such as less than 40%. The size of the openings in the mesh structure may be varied from embodiment to embodiment, again depending on the use of the body.

In a specific embodiment the body may include two flanges. In other specific embodiments the body may include even more flanges. Two or more flanges may e.g. be advantageous when mounting or installing the device. The flanges may be positioned parallel to each other. The flanges may be positioned opposite each other. The flanges may be positioned or placed with an angular distance different from 180 degrees, e.g. 45 degrees as a minimum angular distance.

The body may be defined by a generatrix being a square, a triangular, a circle or any combination thereof.

Examples of embodiments of the present invention will be disclosed with reference to the attached drawings in which:
Fig. 1 is a schematic view of a device according to the present invention,
Figs. 2 and 2a are schematic views of a device according to the present invention installed in a roof construction,
Figs. 3 and 3a are schematic views of a device according to the present invention installed in a roof construction,
Figs. 4 and 4a are schematic views of a device according to the present invention installed in brick wall construction, and
Figs. 5 and 6 are schematic views of alternative embodiments of the present invention.

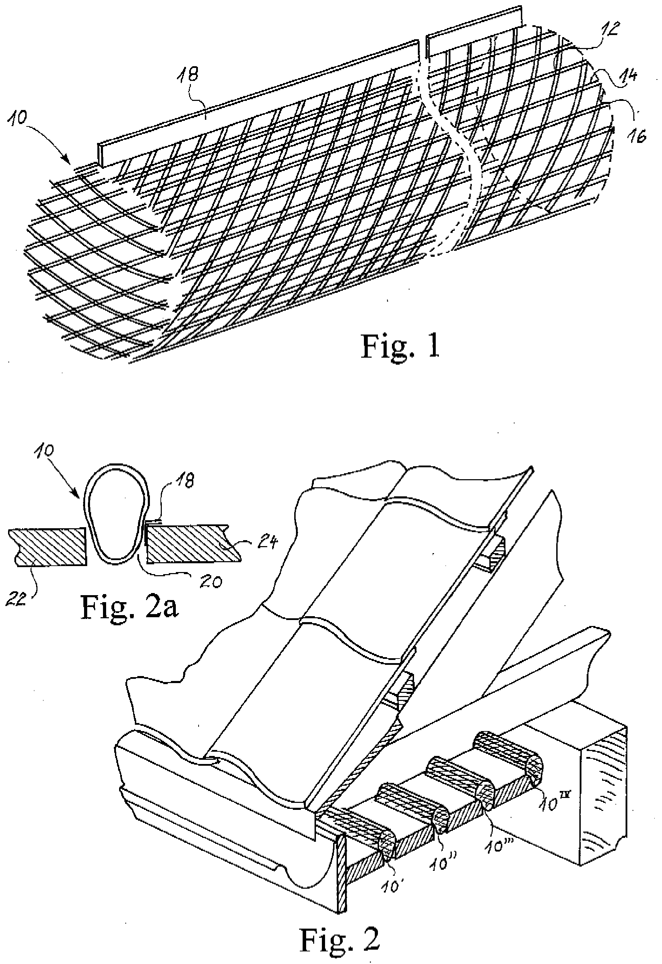

Fig. 1 is a schematic view of a body generally denoted 10 having a wall 12 of a mesh-type structure. The mesh is comprised by a first plurality of threads 14 and a second plurality of threads 16. The first plurality of threads 14 are orientated in a first direction. The second plurality of threads 16 are orientated in a second direction, with an angle of approximately 45 degrees between the two orientations. The mesh structure has a hole-area of more than 50%, i.e. more than 50% of the surface area is hole or not mesh.

In the presently preferred embodiment, the mesh structure is made from polyethylene. The material is capable of withstanding down to -40 degrees centigrade.

The surface of the mesh structure is smooth, or substantially smooth.

In the embodiment shown in Fig. 1, the threads 14 are orientated in a direction parallel to the length-wise direction defined by the body 12.

On the wall 12 a flange 18 is mounted. The flange 18 is formed integrally with the wall 12. The flange 18 and the body are extruded from the same material and are extruded at substantially the same time. In alternative embodiments, the flange 18 and the wall 12 may be formed at different times and then assembled later.

The wall 12 is flexible in the direction perpendicular to the length-wise direction defined by the length of the body 10. The wall 12 is in normal use not flexible in the direction parallel to the length-wise direction of the body 10.

Figs. 2 and 2a are schematic views of devices according to the present invention installed in a roof construction. Fig. 2a is a schematic zoomed view of a device 10' installed in a slit or opening 20 defined between two wooden boards 22 and 24 of the roof construction. The device or snow guard 10 has been squeezed into the opening 20. The flexibility of the snow guard 10 allows it to be deformed so that it will fit tightly into a range of openings.

The snow guard 10 allows ventilation of the roof construction while preventing snow and other particulate matter to flow in or under the roof construction.

The flange 18 of the snow guard 10 abuts the board 24. The flange 18 may be fastened to the board 24 by using nails, screws or any other fastening means.

In further alternative embodiments the device or snow guard may include more than one flange, e.g. two flanges. In the example shown in Fig. 2a, the two flanges may then abut the two boards 22 and 24.

Fig. 2 schematically shows four snow guards 10', 10", 10"', 10"" installed in a roof construction.

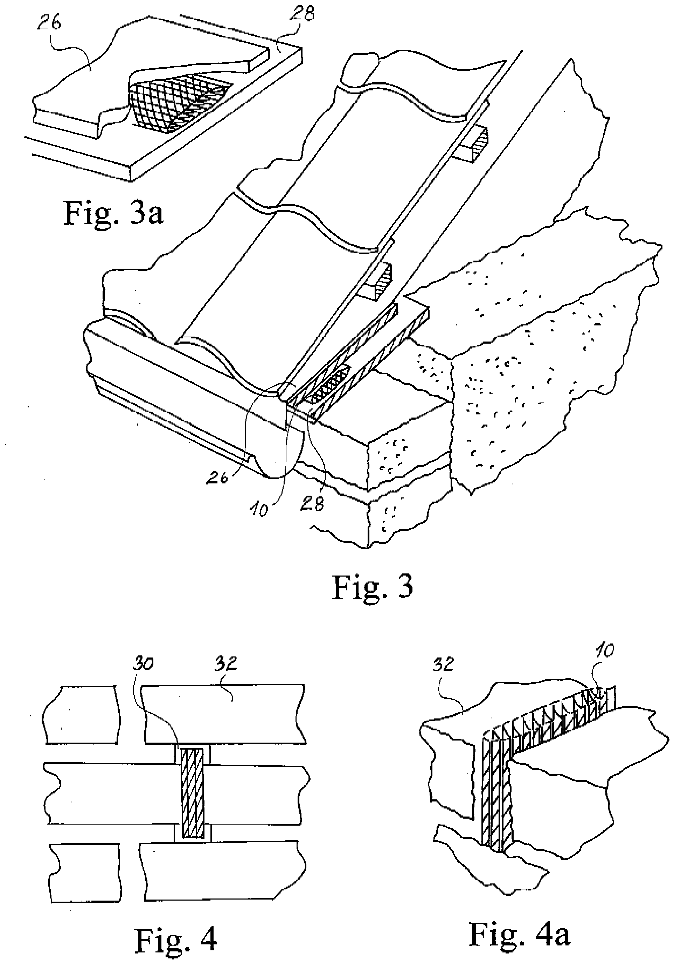

Figs. 3 and 3a are schematic views of a device according to the present invention installed in a roof construction. Figs. 3 and 3a show the device installed in an alternative type of roof construction.

The snow guard 10 shown is mounted between two wooden boards 26 and 28 of the roof construction. As before, the snow guard allows ventilation of the roof construction while preventing snow and other particulate matter to flow in or under the roof construction.

Figs. 4 and 4a are schematic views of a device according to the present invention installed in brick wall construction. The snow guard 10 shown in Fig. 4 is installed in a joint or slit 30 in a brick wall 32. The snow guard is installed in a slit or joint 30 between two bricks of the brick wall 32. This allows for ventilation of the interior of the wall construction while keeping out insects, snow and other particulate matter.

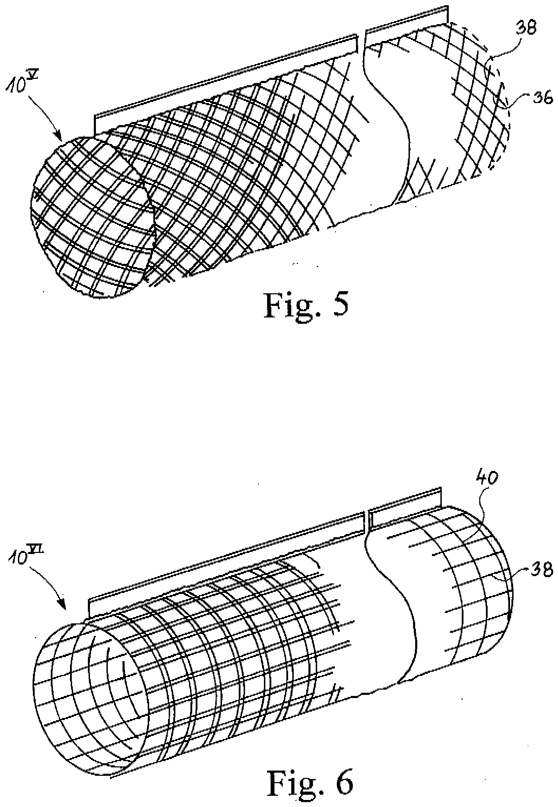

Figs. 5 and 6 are schematic views of alternative embodiments of the present invention.

Fig. 5 schematically shows an embodiment of a snow guard 10^{v}. The body comprises threads of a plurality 34 orientated in a direction approximately 45 degrees relative to the length-wise direction defined by the length of the body of the snow guard. The body further comprises threads of a plurality 36 orientated in a direction approximately 45 degrees relative to the length-wise direction defined by the length of the body of the snow guard, but 90 degrees relative to the other plurality of threads 34.

Fig. 6 schematically shows an embodiment of a snow guard 10^{vi}. The body comprises threads of a plurality 38 orientated in a direction approximately parallel to the length-wise direction defined by the length of the body of the snow guard 1o^{vi}. The body of the snow guard 10^{vi} further comprises threads of a plurality 40 orientated in a direction approximately perpendicular relative to the length-wise direction defined by the length of the body of the snow guard, but 90 degrees relative to the other plurality of threads 38.

## Claims

1. A method of producing a snow guard using an apparatus comprising:
a reservoir for storing granulate material,
said reservoir having a first inlet and a first outlet,
a heating and pressurising unit including a chamber having a second inlet and a second outlet,
said second inlet in communication with said first outlet, a path of travel defined from said second inlet to said second outlet,
said heating unit comprising heating and pressurising elements distributed along said path of travel,
an extruder unit mounted downstream relative to said heating and pressurising unit at said second outlet, said extruder unit further including an extruder heating unit, said extruder defining an extruder outlet, said extruder unit generating a mesh-type tubular structure,
the method comprising the steps of:
supplying said granulate material to said heating and pressurising unit from said reservoir via said first outlet to said second inlet,
conveying said granulate material along said path of travel,
heating said granulate material to an elevated temperature and pressurising said granulate material to an elevated pressure while conveying said granulate material along said path in said heating and pressurising unit,
said heating and pressurising performed according to a specific heating and pressurising profile,
transferring said heated and pressurised granulate material to said extruder unit,
heating said granulate material within said extruder heating unit to an elevated temperature,
extruding said mesh-type tubular structure from said granulate material, said mesh-type tubular structure defining a length-wise direction said mesh-type tubular structure comprising a first plurality of threads (14) going in a first direction substantially parallel to said length-wise direction and a second plurality of threads (16) going in a second direction different from the first direction,
integrally extruding a flange (18) extending from said mesh-type tubular structure, said flange (18) extending parallel to said length-wise direction, and
cooling said extruded mesh-type tubular structure by said cooling unit according to a specific cooling profile.

2. The method according to claim 1, wherein said flange (18) is produced in a separate processing step independently of said mesh-type tubular structure.

3. A snow guard **characterized in that** it is manufactured by a method according to any of the claims 1-2, the snow guard comprising:
a body (10) having a wall (12) of a mesh structure (14, 16),
said body (10) made from a flexible and resilient material,
said body (10) defining a substantially cylindrical geometry and a length-wise direction,
said body (10) being non-flexible in a direction parallel to said length-wise direction and
a flange (18) integrally formed on a surface of said body (10), said flange (18) extends from said surface of said body (10) parallel to said length-wise direction and said body (10) is made from an extruded material and said flange (18) is co-extruded with said body and , wherein said body (10) comprises a first plurality of threads (14) orientated substantially parallel to said length-wise direction and a second plurality of threads (16) orientated in a direction so as to define a specific angle to said length-wise direction.

4. The snow guard according to claim 3, wherein said specific angle is 1 to 90 degrees, such as 5 to 75 degrees, such as 10 to 60 degrees, such as 20 to 50 degrees, such as 30 to 50 degrees, such as 40 to 48 degrees, such as 1 to 5 degrees, such as 5 to 15 degrees, such as 15 to 25 degrees, such as 25 to 35 degrees, such as 35 to 40 degrees, such as 40 to 50 degrees, such as 50 to 65 degrees, such as 65 to 75 degrees, such as 75 to 80 degrees, such as 80 to 90 degrees, preferably approximately 45 degrees.

5. The snow guard according to any of the claims 3-4, wherein said mesh (14, 16) and said flange (18) are made from polyethylene, HDPE, PP, LDPE, PVC, NYLON, ABS or any other polymer material.

6. The snow guard according to any of the claims 3-5, wherein said body (10) defines a width of 1 to 25 cm, such as 2 to 20 cm, such as 5 to 15 cm, such as 10 to 12 cm, such as 1 to 2 cm, such as 2 to 4 cm, such as 4 to 6 cm, such as 6 to 8 cm, such as 8 to 10 cm, such as 10 to 12 cm, such as 12 to 14 cm, such as 14 to 16 cm, such as 16 to 18 cm, such as 18 to 20 cm, such as 20 to 25 cm, preferably 3 to 12 cm.

7. The snow guard according to any of the claims 3-6, wherein the area of said mesh structure (14, 16) includes less than 50% material, such as less than 40%.

8. The snow guard according to any of the claims 3-7, wherein said body (10) includes two flanges (18).

9. The snow guard according to claim 8, wherein said flanges (18) are positioned parallel to each other.

10. The snow guard according to any of the claims 3-9, wherein said cylindrical body (10) is defined by a generatrix being a square, a triangular, a circle or any combination thereof.

## Patentansprüche

1. Verfahren zur Herstellung eines Schneefangs unter Verwendung einer Einrichtung umfassend:
einen Behälter zum Lagern von Granulatmaterial,
wobei der Behälter einen ersten Einlass und einen ersten Auslass aufweist,
eine eine Kammer enthaltende Heiz- und Druckeinheit, die einen zweiten Einlass und einen zweiten Auslass aufweist,
wobei der zweite Einlass mit dem ersten Auslass in Verbindung steht, einen vom zweiten Einlass zum zweiten Auslass definierten Förderweg,
wobei die Heizeinheit längs des Förderwegs verteilte Heiz- und Druckelemente umfasst,
eine der Heiz- und Druckeinheit am zweiten Auslass nachgeordnete Extrudiereinheit, wobei die Extrudiereinheit ferner eine Extrudierheizeinheit umfasst, wobei der Extruder einen Extrudierauslass definiert, wobei die Extrudiereinheit eine netzartige rohrförmige Struktur erzeugt,
wobei das Verfahren die folgenden Schritte umfasst:
Zuführen des Granulatmaterials aus dem Behälter durch den ersten Auslass über den zweiten Einlass in die Heiz- und Druckeinheit,
Fördern des Granulatmaterials längs des Förderwegs,
Erhitzen des Granulatmaterials auf eine erhöhte Temperatur und Drücken des Granulatmaterials auf einen erhöhten Druck, während das Granulatmaterial längs des Wegs in der Heiz- und Druckeinheit gefördert wird, wobei das Heizen und Drücken nach einem bestimmten Heiz- und Druckprofil erfolgt,
Überführen des erhitzten und gedrückten Granulatmaterials in die Extrudiereinheit,
Erhitzen des Granulatmaterials innerhalb der Extrudierheizeinheit auf eine erhöhte Temperatur,
Extrudieren der netzartigen rohrförmigen Struktur (34) aus dem Granulatmaterial, wobei die netzartige rohrförmige Struktur eine Längsrichtung definiert, wobei die netzartige rohrförmige Struktur eine erste Mehrheit von Fäden (14) umfasst, die in eine erste Richtung im Wesentlichen parallel zur Längsrichtung läuft, sowie eine zweite Mehrheit von Fäden (16), die in eine von der ersten Richtung unterschiedliche zweite Richtung läuft,
integrales Extrudieren eines Flansches (18), der sich von der netzartigen rohrförmigen Struktur erstreckt, wobei der Flansch (18) sich parallel zur Längsrichtung erstreckt, und
Kühlen der extrudierten netzartigen rohrförmigen Struktur durch die Kühleinheit nach einem bestimmten Kühlprofil.

2. Verfahren nach Anspruch 1, wobei der Flansch (18) in einem getrennten und von der netzartigen rohrförmigen Struktur unabhängigen Herstellungsschritt hergestellt wird.

3. Schneefang **dadurch gekennzeichnet, dass** er durch das Verfahren nach einem jeglichen der Ansprüche 1-2 hergestellt ist, wobei der Schneefang umfasst:
einen Körper (10), der eine Wand (12) von Netzstruktur (14, 16) aufweist,
wobei der Körper (10) aus einem flexiblen und belastbaren Material besteht,
wobei der Körper (10) eine im Wesentlichen zylindrische Geometrie und eine Längsrichtung definiert,
wobei der Körper (10) in eine Richtung parallel zur Längsrichtung unflexibel ist, und einen auf einer Oberfläche des Körpers (10) integral gebildeten Flansch (18), wobei der Flansch (18) sich von der Oberfläche des Körpers (10) parallel zur Längsrichtung erstreckt, und wobei der Körper (10) aus einem extrudierten Material gemacht ist, und wobei der Flansch (18) mit dem Körper co-extrudiert ist, und wobei der Körper (10) eine erste Mehrheit von Fäden (14) umfasst, die im Wesentlichen parallel zur Längsrichtung orientiert ist, und eine zweite Mehrheit von Fäden (16), die in eine Richtung so orientiert ist, dass einen bestimmten Winkel zur Längsrichtung definiert wird.

4. Schneefang nach Anspruch 3, wobei der bestimmten Winkel 1 bis 90 Grad ist, wie zum Beispiel 5 bis 75 Grad, wie zum Beispiel 10 bis 60 Grad, wie zum Beispiel 20 bis 50 Grad, wie zum Beispiel 30 bis 50 Grad, wie zum Beispiel 40 bis 48 Grad, wie zum Beispiel 1 bis 5 Grad, wie zum Beispiel 5 bis 15 Grad, wie zum Beispiel 15 bis 25 Grad, wie zum Beispiel 25 bis 35 Grad, wie zum Beispiel 35 bis 40 Grad, wie zum Beispiel 40 bis 50 Grad, wie zum Beispiel 50 bis 65 Grad, wie zum Beispiel 65 bis 75 Grad, wie zum Beispiel 75 bis 80 Grad, wie zum Beispiel 80 bis 90 Grad, bevorzugt ungefähr 45 Grad.

5. Schneefang nach einem jeglichen der Ansprüche 3-4, wobei das Netz (14, 16) und der Flansch (18) aus Polyethylen, HDPE, PP, LDPE, PVC, NYLON, ABS oder jeglichem sonstigen Polymermaterial gemacht sind.

6. Schneefang nach einem jeglichen der Ansprüche 3-5, wobei der Körper (10) eine Breite definiert von 1 bis 25 cm, wie zum Beispiel 2 bis 20 cm, wie zum Beispiel 5 bis 15 cm, wie zum Beispiel 10 bis 12 cm, wie zum Beispiel 1 bis 2 cm, wie zum Beispiel 2 bis 4 cm, wie zum Beispiel 4 bis 6 cm, wie zum Beispiel 6 bis 8 cm, wie zum Beispiel 8 bis 10 cm, wie zum Beispiel 10 bis 12 cm, wie zum Beispiel 12 bis 14 cm, wie zum Beispiel 14 bis 16 cm, wie zum Beispiel 16 bis 18 cm, wie zum Beispiel 18 bis 20 cm, wie zum Beispiel 20 bis 25 cm, bevorzugt 3 bis 12 cm.

7. Schneefang nach einem jeglichen der Ansprüche 3-6, wobei die Fläche der Netzstruktur (14, 16) weniger als 50% Material, wie zum Beispiel weniger als 40% einbezieht.

8. Schneefang nach einem jeglichen der Ansprüche 3-7, wobei der Körper (10) zwei Flanschen (18) umfasst.

9. Schneefang nach Anspruch 8, wobei die Flanschen (18) parallel zu einander angeordnet sind.

10. Schneefang nach einem jeglichen der Ansprüche 3-9, wobei der zylindrische Körper (10) durch eine Generatrix definiert ist in der Form von einem Viereck, einem Dreieck, einem Kreis oder jeglicher Kombination davon.

## Revendications

1. Procédé de production d'un garde-neige en utilisant un dispositif comprenant:
un réservoir pour conserver du matériau granulé,
ledit réservoir ayant une première entrée et une première sortie,
une unité de pressurisation et de chauffage comportant une chambre ayant une deuxième entrée et une deuxième sortie,
ladite deuxième entrée étant en communication avec ladite première sortie, une voie de déplacement défini (à partir) de ladite deuxième entrée à ladite deuxième sortie, ladite unité de chauffage comprenant des éléments de chauffage et de pressurisation distribués le long de ladite voie de déplacement,
une unité d'extrusion montée en aval par rapport à ladite unité de chauffage et de pressurisation à ladite deuxième sortie, ladite unité d'extrusion comportant en outre une unité de chauffage d'extrusion, ladite unité d'extrusion générant une structure tubulaire en treillis,
le procédé comprenant les étape de:
alimenter ledit matériau granulé à ladite unité de chauffage et de pressurisation dudit réservoir par ladite première sortie à ladite deuxième entrée,
transporter ledit matériau granulé le long de ladite voie de déplacement,
chauffer ledit matériau granulé à une température élevée et presser ledit matériau granulé à une pression élevée en transportant ledit matériau granulé le long de ladite voie dans ladite unité de chauffage et de pressurisation,
ledit chauffage et ladite pressurisation étant effectués selon un profil de chauffage et de pressurisation spécifique,
transférer ledit matériau granulé chauffé et pressurisé à ladite unité d'extrusion,
chauffer ledit matériau granulé à l'intérieur de ladite unité de chauffage d'extrusion à une température élevée,
extruder ladite structure tubulaire en treillis dudit matériau granulé, ladite structure tubulaire en treillis définissant un sens longitudinal, ladite structure tubulaire en treillis comprenant une première pluralité de filets (14) allant dans un premier sens substantiellement en parallèle avec ledit sens longitudinal,
et une deuxième pluralité de filets (16) allant dans un deuxième sens étant différent du premier sens,
extruder intégralement une bride (18) s'étendant de ladite structure tubulaire en treillis, ladite bride (18) s'étendant en parallèle audit sens longitudinal, et
refroidir ladite structure tubulaire en treillis extrudée par ladite unité de refroidissement selon un profil de refroidissement spécifique.

2. Procédé selon la revendication 1, où ladite bride (18) est produite selon une étape de traitement séparée, indépendament de ladite structure tubulaire en treillis.

3. Garde-neige **caractérisé en ce qu'**il est fabriqué suivant un procédé selon l'une quelconque des revendications 1 à 2, le garde-neige comprenant:
un corps (10) ayant une paroi (12) d'une structure en treillis (14, 16), ledit corps (10) étant fait d'un matériau résilient et souple,
ledit corps (10) définissant une géométrie substantiellement cylindrique et un sens longitudinal,
ledit corps (10) étant non flexible dans un sens parallèl audit sens longitudinal et
une bride (18) formée intégralement sur une surface dudit corps (10), ladite bride (18) s'étendant de ladite surface dudit corps (10) en parallèl audit sens longitudinal, et ledit corps (10) étant fait d'un matériau extrudé, et ladite bride (18) étant co-extrudée avec ledit corps et, où ledit corps (10) comprend une première pluralité de filets (14) orientée substantiellement en parallèl audit sens longitudinal, et une deuxième pluralité de filets (16) étant orientée dans un sens de manière à définir un angle spécifique à ladite direction longitudinal.

4. Garde-neige selon la revendication 3, où l'angle spécifique se situe entre 1 et 90 degrés, tel que'entre 7 à 75 degrés, tel que'entre 10 à 60 degrés, tel qu'entre 20 à 50 degrés, tel qu'entre 30 à 50 degrés, tel qu'entre 40 à 48 degrés, tel qu'entre 1 à 5 degrés, tel qu'entre 5 à 15 degrés, tel qu'entre 15 à 25 degrés, tel qu'entre 25 à 35 degrés, tel qu'entre 35 à 40 degrés, tel qu'entre 40 à 50 degrés, tel qu'entre 50 à 65 degrés, tel qu'entre 65 à 75 degrés, tel qu'entre 75 à 80 degrés, tel qu'entre 80 à 90 degrés, préférablement environ 45 degrés.

5. Garde-neige selon l'une quelconque des revendications 3 à 4, où ledit treillis (14, 16) et ladite bride (18) sont faites de polyéthylène, de PEHD, de PP, de LDPE, de PVC, de NYLON, d'ABS ou de n'importe autre matériau polymère.

6. Garde-neige selon l'une quelconque des revendications 3 à 5, où ledit corps (10) définit une largeur d'entre 1 à 25 cm, telle qu'éntre 2 à 20 cm, telle qu'éntre 5 à 15 cm, telle qu'éntre 10 à 12 cm, telle qu'éntre 1 à 2 cm, telle qu'éntre 2 à 4 cm, telle qu'éntre 4 à 6 cm, telle qu'éntre 6 à 8 cm, telle qu'éntre 8 à 10 cm, telle qu'éntre 10 à 12 cm, telle qu'éntre 12 à 14 cm, telle qu'éntre 14 à 16 cm, telle qu'éntre 16 à 18 cm, telle qu'éntre 18 à 20 cm, telle qu'éntre 20 à 25 cm, préférablement de 3 à 12 cm.

7. Garde-neige selon l'une quelconque des revendications 3 à 6, où la zone de ledit structure en treillis (14, 16) comporte moins de 50% de matériau, tel que moins de 40%.

8. Garde-neige selon l'une quelconque des revendications 3 à 7, où ledit corps (10) comporte deux brides (18).

9. Garde-neige selon la revendication 8, où lesdites brides (18) sont positionnées en parallèlle l'une par rapport à l'autre.

10. Garde-neige selon l'une quelconque des revendications 3 à 9, où ledit corps cylindrique (10) est défini par une génératrice étant un carré, un triangle, un cercle ou une combinaison de ceux-ci.
